# EUROPÄISCHE PATENTSCHRIFT

(11) **EP 0 893 201 B1**
(45) Veröffentlichungstag und Bekanntmachung des Hinweises auf die Patenterteilung: **17.03.2004**
(21) Anmeldenummer: 98112885.3
(22) Anmeldetag: 10.07.1998
(51) Int. Cl.: B23Q 11/08, B23Q 1/60

(54) **Teleskop-Stahlabdeckung**
Telescopic steel cover
Protection téléscopique d'acier

(30) Priorität: 16.07.1997 DE 19730500
(43) Veröffentlichungstag der Anmeldung: 27.01.1999
(73) Patentinhaber: Hennig Holding GmbH, 85551 Kirchheim (DE)
(72) Erfinder: Diels, Wolfgang, 80807 München (DE)
(74) Vertreter: Laufhütte, Dieter, Dr.-Ing.

(56) Entgegenhaltungen:
- US-A- 3 745 725
- US-A- 3 785 418

## Beschreibung

Die Erfindung betrifft eine Teleskop-Stahlabdeckung zum Schutz einer Führungsbahn einer Werkzeugmaschine, mit mindestens vier hintereinander angeordneten und in einer Auszugrichtung sowie einer dazu entgegengesetzten Einschubrichtung zwischen einer Einschubstellung und einer Auszugstellung relativ zueinander bewegbaren Auszugelementen, bei dem eine Gruppe von drei unmittelbar hintereinander angeordneten Auszugelementen über eine bei einer Relativbewegung zwischen zwei Auszugelementen der Gruppe zwangsweise eine Relativbewegung zwischen diesen beiden Auszugelementen und dem dritten Auszugelement der Gruppe bewirkende Kopplungseinrichtung miteinander verbunden sind.

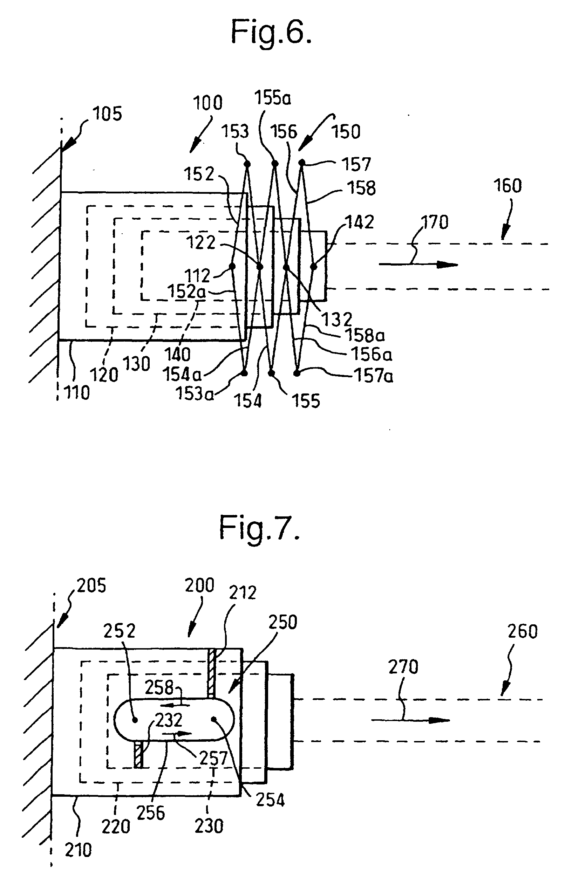

Derartige Auszugsysteme werden beispielsweise zur Abdeckung von Führungsbahnen einer Werkzeugmaschine eingesetzt, um diese während des Betriebs der Werkzeugmaschine vor Verunreinigungen zu schützen. In Fig. 6 ist ein Beispiel bekannter Auszugsysteme der eingangs beschriebenen Art in Form einer Teleskop-Stahlabdeckung für eine Führungsbahn einer Werkzeugmaschine schematisch dargestellt. Dieses System weist vier Auszugelemente 110, 120, 130 und 140 in Form von zur Abdeckung einer Führungsbahn 160 einer Werkzeugmaschine ausgelegten Abdeckelementen sowie eine scherenartige Kopplungseinrichtung 150 auf. Das Abdeckelement 110 ist an einem Rahmen 105 der Werkzeugmaschine befestigt, während das Abdeckelement 140 an ein längs der Führungsbahn 160 verfahrbares Bearbeitungswerkzeug (nicht dargestellt) der Werkzeugmaschine gekoppelt ist. Die Kopplungseinrichtung 150 weist zwei drehbar auf einen am vorderen Ende des Abdeckelements 110 befestigten Gelenkbolzen 112 aufgesetzte Kopplungsstangen 152 bzw. 152a auf, die an ihren dem Gelenkbolzen 112 abgewandten Enden über Drehgelenke 153 bzw. 153a an drehbar auf einen am vorderen Ende des Abdeckelements 120 befestigten Gelenkbolzen 122 aufgesetzte Kopplungsstangen 154 bzw. 154a angelenkt sind. Die Kopplungsstangen 154 bzw. 154a sind an ihren den Drehgelenken 153 bzw. 153a entgegengesetzten Enden über Drehgelenke 155 bzw. 155a an drehbar auf einen am vorderen Ende des Abdeckelementes 130 befestigten Gelenkbolzen 132 aufgesetzte Kopplungsstangen 156 bzw. 156a angelenkt. Diese Kopplungsstangen 156 bzw. 156a sind schließlich über an ihren den Drehgelenken 155 bzw. 155a entgegengesetzten Enden angeordnete Drehgelenke 157 bzw. 157a an drehbar auf einen am vorderen Ende des Abdeckelements 140 befestigten Gelenkbolzen 142 aufgesetzte Kopplungsstangen 158 bzw. 158a angelenkt.

Wenn das an das Abdeckelement 140 gekoppelte Bearbeitungswerkzeug in der durch den Pfeil 170 bezeichneten Richtung längs der Laufbahn 160 verfahren wird, um eine gewünschte Bearbeitung durchzuführen, wird das Abdeckelement 140 mitgeführt. Dadurch wird die Abdeckung aus der in Fig. 6 dargestellten Einschubstellung, in der die Abdeckelemente 110 bzw. 140 teleskopartig ineinander geschoben sind, auseinander gezogen. Durch die Kopplungseinrichtung 150 wird dabei erreicht, daß die durch die Bewegung des Bearbeitungswerkzeugs ausgelöste Auszugbewegung gleichmäßig auf die Auszugelemente 120, 130 und 140 verteilt wird, so daß die Auszugstrecke des Abdeckelementes 140 bezüglich dem Abdeckelement 130 in jeder Phase der Auszugbewegung derjenigen des Abdeckelementes 130 bezüglich dem Abdeckelement 120 und derjenigen des Abdeckelementes 120 bezüglich dem Abdeckelement 110 entspricht. Durch eine derartige Kopplung wird eine störungsfreie Auszugbewegung über die gesamte verfügbare Auszuglänge gewährleistet.

In Abhängigkeit von den Abmessungen der Abdeckelemente kann es dazu jedoch erforderlich sein, scherenförmige Kopplungselemente der in Fig. 6 dargestellten Art zu verwenden, deren Abmessungen in einer senkrecht zur Auszugrichtung 170 verlaufenden Richtung die Abmessungen der Abdeckelemente in dieser Richtung überschreiten. Daher sind Auszugsysteme der in Fig. 6 dargestellten Art bei beengten Einbauverhältnissen nicht einsetzbar. Darüber hinaus werden bei einer Einschubbewegung aus der durch die Auszugbewegung in der durch den Pfeil 170 bezeichneten Richtung erreichten Auszugstellung erhebliche Kräfte auf die an den Abdeckelementen befestigten Gelenkbolzen sowie die Gelenkstangen und Drehgelenke der Kopplungseinrichtung 150 ausgeübt, was einen starken Verschleiß von Auszugsystemen der in Fig. 6 dargestellten Art zum Ergebnis hat.

Angesichts dieser Probleme wurde eine Teleskopabdeckung der in Fig. 7 schematisch dargestellten Art entwickelt. Diese Teleskopabdeckung weist drei Abdeckelemente 210, 220 und 230 und eine Kopplungseinrichtung 250 auf. Das Abdeckelement 210 ist an einem Rahmen 205 der Werkzeugmaschine befestigt, während das Abdeckelement 230 an ein Bearbeitungswerkzeug (nicht dargestellt) der Werkzeugmaschine koppelbar ist. Die Kopplungseinrichtung 250 der in Fig. 7 dargestellten Anordnung weist eine zwei bezüglich dem Abdeckelement 220 festgelegte und senkrecht zur durch den Pfeil 270 bezeichneten Auszugrichtung verlaufende Umlenkachsen 252 und 254 umlaufende Kette 256 sowie zwei an einander gegen überliegende Kopplungsbereiche der Kette 256 gekoppelte Mitnehmer 212 und 232 auf. Der Mitnehmer 212 ist am Abdeckelement 210 befestigt, während der Mitnehmer 232 am Abdeckelement 230 befestigt ist.

Bei einer Auszugbewegung des Abdeckelements 230 in der durch den Pfeil 270 bezeichneten Richtung wird der Mitnehmer 232 bezüglich dem Abdeckelement 220 in der durch den Pfeil 257 bezeichneten Richtung bewegt, während der Mitnehmer 212 bezüglich dem Abdeckelement 220 in der durch den Pfeil 258 bezeichneten Richtung bewegt wird. Aufgrund der Befestigung des Mitnehmers 212 am Abdeckelement 210, welches seinerseits am Maschinenrahmen 205 befestigt ist, wird so erreicht, daß zu jedem Zeitpunkt der Auszugbewegung die Auszugstrecke des Abdeckelementes 230 bezüglich dem Abdeckelement 220 derjenigen des Abdeckelementes 220 bezüglich dem Abdeckelement 210 entspricht. Auf diese Weise kann auch unter Verwendung der Kopplungseinrichtung 250 eine störungsfreie Auszugbewegung über die ganze verfügbare Auszuglänge gewährleistet werden. Ferner nimmt die Kopplungseinrichtung 250 kaum Platz in Anspruch. Schließlich kann die zur Kopplung der Auszugelemente 210 bis 230 benötigte Umlaufbewegung der Kette 256 sowohl in der durch den Pfeil 270 bezeichneten Auszugrichtung als auch in der dieser entgegengesetzten Einschubrichtung ohne nennenswerten Kraftaufwand bewirkt werden, so daß die Kopplungseinrichtung 250 keinem nennenswerten Verschleiß unterliegt.

Die in Fig. 7 dargestellte Kopplungseinrichtung 250 kann jedoch nur zur Kopplung von insgesamt drei Auszugelementen eingesetzt werden. Daher beträgt die Länge eines mit einer derartigen Kopplungseinrichtung versehenen Auszugsystems in der Einschubstellung mindestens einem Drittel der maximal erreichbaren Auszuglänge in der Auszugstellung. Daher ist das in Fig. 7 dargestellte Auszugsystem nicht einsetzbar, wenn gleichzeitig eine große Auszuglänge und möglichst geringe Abmessungen in der Einschubstellung benötigt werden. Aber auch wenn die Abmessungen in der Einschubstellung keinen besonderen Beschränkungen unterliegen kann das in Fig. 7 dargestellte Auszugsystem zu Problemen bei der Handhabung führen wenn eine große Auszuglänge benötigt wird, weil dann sehr große und schwer handhabbare Auszugelemente benötigt werden.

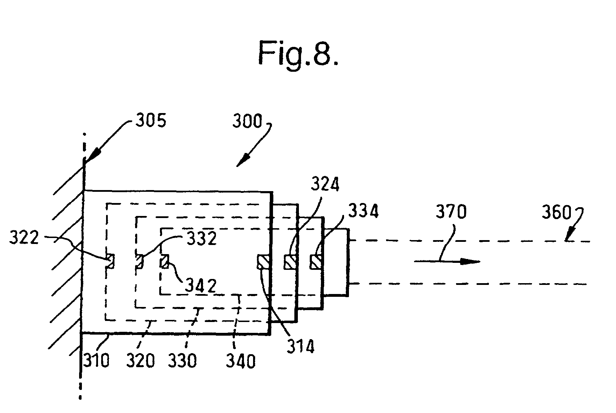

Im Hinblick auf die gerade beschriebenen Probleme werden heute Auszugsysteme der in Fig. 8 schematisch dargestellten Art benutzt, wenn gleichzeitig große Auszuglängen und möglichst geringe Abmessung in der Einschubstellung benötigt werden. Das in Fig. 8 dargestellte Auszugsystem in Form einer Teleskopabdeckung für eine Führungsbahn 360 einer Werkzeugmaschine umfaßt vier in der in Fig. 8 dargestellten Einschubstellung teleskopartig ineinander geschobene Abdeckelemente 310, 320, 330 und 340. Das Abdeckelement 310 ist an einem Maschinenrahmen 305 befestigt, während das Abdeckelement 340 an ein Bearbeitungswerkzeug der Werkzeugmaschine koppelbar und bei einer Bewegung desselben längs der Führungsbahn 360 von diesem mitführbar ist. An den hinteren Enden der Abdeckelemente 320, 330 und 340 sind Mitnehmer 322, 332, 342 angeordnet, die mit an den vorderen Enden der Auszugelemente 310, 320 und 330 angeordneten Anschlagelementen 314, 324 und 334 zusammenwirken.

Bei einer Bewegung des Bearbeitungswerkzeugs (nicht dargestellt) der Werkzeugmaschine in der durch den Pfeil 370 bezeichneten Richtung wird das Abdeckelement 340 zunächst unabhängig von den Abdeckelementen 310, 320 und 330 mitgeführt, bis der am hinteren Ende des Abdeckelements 340 angeordneten Mitnehmer 342 am am vorderen Ende des Abdeckelementes 330 angeordneten Anschlagelement 334 anschlägt und so das Abdeckelement 330 mitführt. Im weiteren Verlauf der Auszugbewegung schlägt der am hinteren Ende des Abdeckelements 330 angeordnete Mitnehmer 332 am am vorderen Ende des Abdeckelements 320 angeordneten Anschlagelement 324 an und nimmt so das Abdeckelement 320 mit. Schließlich wird die Auszugbewegung gestoppt, wenn der am hinteren Ende des Abdeckelements 320 angeordnete Mitnehmer 322 am am vorderen Ende Abdeckelements 310 angeordneten Anschlag 314 anschlägt.

Mit einem Auszugsystem der in Fig. 8 dargestellten Art können selbst bei sehr großen maximalen Auszuglängen nahezu beliebig geringe Abmessungen in der Einschubstellung erreicht werden. Durch die Anschläge der Mitnehmer 342 und 332 an den Anschlagelementen 334 bzw. 324 werden jedoch im allgemeinen so starke Erschütterungen auf das an das Abdeckelement 340 gekoppelte Bearbeitungswerkzeug ausgeübt, daß deutliche Beeinträchtigungen der Bearbeitungsqualität an den entsprechenden Stellen des mit dem Bearbeitungswerkzeug bearbeiteten Werkstücks auftreten können. Zur Beseitigung dieser Mängel wurde bereits vorgeschlagen, die Mitnehmer bzw. Anschlagelemente von Auszugsystemen der in Fig. 8 dargestellten Art mit Dämpfungselementen zu versehen. Mit diesen Dämpfungselementen können die durch die Anschläge ausgelösten Erschütterungen bei Auszuggeschwindigkeiten von bis zu 40 m pro Minute noch hinreichend gedämpft werden. Mit modernen Werkzeugmaschinen sind jedoch Verfahrgeschwindigkeiten der Bearbeitungswerkzeug während der Bearbeitung von 100 m pro Minute oder mehr erreichbar. Die ohne Beeinträchtigung der Bearbeitungsgualität erreichbare maximale Bearbeitungsgeschwindigkeit wird daher durch die unter Sicherstellung einer hinreichenden Erschütterungsdämpfung maximal erreichbare Auszuggeschwindigkeit der zur Führungsbahnabdeckung der Maschine benötigten Auszugsysteme begrenzt.

Aus der US 3 745 725 A ist eine Baukonstruktion bekannt, die mehrere derart bemessene und ineinandergepaßte Bauelemente enthält, daß sie zur Vergrößerung oder zur Verkleinerung ihres Volumens auseinandergezogen oder zusammengeschoben werden kann. Jedes dieser Bauelemente enthälte Seitenwände, innerhalb derer um vertikale Drehachsen drehbare Umlenkrollen angeordnet sind, über die endlose Kabel herumgeführt sind, die über Mitnehmer mit benachbarten Bauelementen in Verbindung stehen.

Angesichts der eingangs geschilderten Probleme im Stand der Technik liegt der Erfindung die Aufgabe zugrunde, ein verschleißarmes Auszugssystem bereitzustellen, das unter Einhaltung von geringen Abmessungen in der Einschubstellung und einer großen maximalen Auszuglänge eine erschütterungsfreie Auszugbewegung über eine möglichst lange Auszugstrecke erlaubt.

Erfindungsgemäß wird diese Aufgabe durch die Merkmale des Anspruchs 1 gelöst.

Durch die Verwendung von mindestens vier hintereinander angeordneten Auszugelementen kann mit dem erfindungsgemäßen Auszugsystem unter Sicherstellung geringer Abmessungen in der Einschubstellung eine grundsätzlich beliebig große Auszuglänge erreicht werden. Diese Auszuglänge kann durch eine Auszugbewegung erreicht werden, die zumindest während der Phase, in der die drei über die Kopplungseinrichtung miteinander verbundenen Auszugelemente relativ zueinander bewegt werden, erschütterungsfrei abläuft. Dadurch kann eine erschütterungsfreie Bearbeitung längs einer Arbeitsstrecke erreicht werden, die der Summe aus der maximalen Auszugstrecke des einen äußeren Auszugelementes der Gruppe bezüglich dem mittleren Auszugelement und der maximalen Auszugstrecke des mittleren Auszugelementes bezüglich dem anderen äußeren Auszugelement der Gruppe entspricht. Durch die erfindungsgemäße Anordnung der Kopplungsbereiche wird sichergestellt, daß die Auszugbewegung längs dieser Bearbeitungsstrecke durch eine simultane Bewegung der beiden äußeren Auszugelemente bezüglich dem mittleren Auszugelement der Gruppe erfolgt, wodurch die Erschütterungsfreiheit der Auszugbewegung längs der Bearbeitungsstrecke sichergestellt wird. Die zu diesem Zweck eingesetzte Kopplungseinrichtung umfaßt lediglich drei Elemente, nämlich das Kopplungselement und die beiden Mitnehmer, die äußerst kompakt ausgeführt werden können. Daher werden die Abmessungen des erfindungsgemäßen Auszugsystems auch in der Einschubstellung fast ausschließlich durch die Abmessungen der Auszugelemente bestimmt. Schließlich wird die Bewegungskopplung mit der Kopplungseinrichtung des erfindungsgemäßen Auszugsystems über eine Umlaufbewegung des Kopplungselementes erreicht, die in jeder Phase der Auszug- und Einschubbewegung ohne nennenswerten Kraftaufwand bewirkt werden kann. Daher erweist sich die Kopplungseinrichtung des erfindungsgemäßen Auszugsystems als äußerst verschleißfest und langlebig.

Eine Verlängerung der Auszugstrecke längs der das erfindungsgemäße Auszugsystem eine erschütterungsfreie Auszugbewegung ermöglicht, wird erreicht, da die Kopplungseinrichtung ein eine bezüglich einem der äußeren Auszugelemente der Gruppe festgelegte und sich senkrecht zur Auszugrichtung erstreckende zweite Umlenkachse umlaufendes und längs einer bezüglich der zweiten Umlenkachse festgelegten und diese umlaufenden zweiten Bahn bewegbares zweites Kopplungselement sowie zwei an entsprechenden Kopplungsbereichen an das zweite Kopplungselement gekoppelte Mitnehmer aufweist, von denen einer mit dem mittleren Auszugelement der Gruppe und der andere mit einem vierten, unmittelbar hinter der Gruppe angeordneten Auszugelement verbunden ist, wobei das zweite Kopplungselement die zweite Umlenkachse zwischen den Kopplungsbereichen zumindest teilweise umläuft.

Mit dieser Anordnung wird die Länge der Auszugstrecke, längs der eine erschütterungsfreie Auszugbewegung erreichbar ist, um die maximale Auszugstrecke des vierten Auszugelementes bezüglich einem der äußeren Auszugelemente der Gruppe verlängert, weil durch den Einsatz des zweiten Kopplungselementes und die daran gekoppelten Mitnehmer eine zur Bewegung der beiden äußeren Auszugelemente der Gruppe bezüglich dem mittleren Auszugelement simultane Auszugbewegung des vierten Auszugelementes bezüglich einem der äußeren Auszugelemente der Gruppe sichergestellt wird. Diese simultane Bewegung des vierten Auszugelementes kann ebenfalls in jeder Phase der Einschub- bzw. Auszugbewegung ohne nennenswerten Kraftaufwand bewirkt werden, weil die erfindungsgemäß dazu verwendete Kopplung ebenfalls durch eine Umlaufbewegung des zweiten Kopplungselementes erreicht wird. Ferner können auch das zweite Kopplungselement und die daran gekoppelten Mitnehmer sehr kompakt ausgeführt werden, so daß durch deren Einbau keine nennenswerte Vergrößerung der Gesamtabmessungen des Auszugsystems verursacht wird.

Unter Sicherstellung der gerade beschriebenen Vorteile ermöglicht das erfindungsgemäße Auszugsystem eine vollständig erschütterungsfreie Auszugbewegung, wenn jedem der zwischen dem ersten und dem letzten Auszugelement des Systems angeordneten Auszugelemente ein Kopplungselement zugeordnet ist, das eine bezüglich dem entsprechenden Auszugelement festgelegte und sich senkrecht zur Auszugrichtung erstreckende Umlenkachse umläuft und längs einer bezüglich dieser Umlenkachse festgelegten und diese umlaufenden Bahn bewegbar ist, wobei an jedes Kopplungselement an entsprechenden Kopplungsbereichen zwei Mitnehmer gekoppelt sind, von denen einer mit dem unmittelbar vor dem entsprechenden Auszugelement angeordneten Auszugelement und der andere mit dem unmittelbar dahinter angeordneten Auszugelement verbunden ist, und das Kopplungselement die jeweilige Umlenkachse zwischen den Kopplungsbereichen zumindest teilweise umläuft.

Mit dem erfindungsgemäßen Auszugsystem wird von zwei über ein Kopplungselement und die daran gekoppelten Mitnehmer verbundenen Auszugelementen in jeder Phase der Auszug- bzw. Einschubbewegung in einander entgegengesetzten Richtungen dieselbe Auszugstrecke bezüglich dem dazwischen angeordneten Auszugelement zurückgelegt, wenn das Kopplungselement die entsprechende Umlenkachse zwischen den Kopplungsbereichen um 180° umläuft.

Die Kopplungselement des erfindungsgemäßen Auszugsystems können beispielsweise in Form von um die entsprechende Umlenkachse drehbaren Zahnrädern ausgeführt sein, an die Mitnehmer in Form die Zahnräder kämmenden Zahnstangen gekoppelt sind. Bei dieser Ausführung der Kopplungselemente sind die einzelnen Kopplungsbereiche jedoch sehr klein, was zu einer entsprechenden Konzentration der während der Auszug- bzw. Einschubbewegung auftretenden Kräfte und folglich zu einem hohen Verschleiß führt. Daher ist es besonders vorteilhaft, wenn mindestens eines der Kopplungselemente zwei parallele, bezüglich dem entsprechenden Auszugelement festgelegt Umlenkachsen umläuft, zwischen denen es zwei parallel zueinander verlaufende, jeweils einen Kopplungsbereich umfassende, geradlinige Abschnitte aufweist. Unter Verwendung derartiger Kopplungselemente können die Kopplungsbereiche über eine vergleichsweise große Länge längs der geradlinigen Abschnitte des Kopplungselementes angeordnet werden, was zu einer entsprechenden Verteilung der während der Auszug- bzw. der Einschubbewegung auftretenden Kräfte und damit zu einer erhöhten Verschleißfestigkeit führt.

Bei einer vorgegebenen maximalen Auszugstrecke zwischen zwei über entsprechende Mitnehmer an ein derartiges Kopplungselement gekoppelten Auszugelementen kann das Kopplungselement besonders kompakt ausgeführt werden, wenn die Kopplungsbereiche spiegelsymmetrisch bezüglich einem diese Strecke zwischen den beiden Umlenkachsen halbierenden Punkt angeordnet sind.

Die Bewegungskopplung zwischen dem Kopplungselement und den Mitnehmern kann stabilisiert werden, indem die Mitnehmer in sich parallel zu den geradlinig verlaufenden Abschnitten des Kopplungselementes erstreckenden Führungen geführt sind. Eine weitere Stabilisierung wird erreicht, wenn zwischen den geradlinig verlaufenden Abschnitten mindestens ein Stützelement, wie etwa eine Stützrolle angeordnet ist.

Falls das erfindungsgemäße Auszugsystem zur Abdeckung einer Führungsbahn einer Werkzeugmaschine eingesetzt wird ist es besonders zweckmäßig, wenn die Auszugelemente sich sowohl in der Einschubstellung als auch in der Auszugstellung zumindest teilweise überlappen, weil so eine vollständige Abdeckung der Führungsbahn sichergestellt wird.

Nachstehend wird die Erfindung unter Bezugnahme auf die Zeichnung, auf die hinsichtlich aller erfindungswesentlichen und in der Beschreibung nicht näher herausgestellten Einzelheiten ausdrücklich verwiesen wird, erläutert. In der Zeichnung zeigt:
- Fig. 1: eine schematische Darstellung eines erfindungsgemäßen Auszugsystems,
- Fig. 2: eine Seitenansicht einer Ausführungsform eines erfindungsgemäßen Auszugsystems in Form einer Teleskop-Stahlabdeckung,
- Fig. 3: eine Draufsicht auf die in Fig. 2 dargestellte Teleskop-Stahlabdeckung,
- Fig. 4: eine Seitenansicht der in Fig. 2 dargestellten Teleskop-Stahlabdeckung in einer Einschubstellung,
- Fig. 5: eine Schnittdarstellung eines Kopplungselementes mit zwei daran gekoppelten Mitnehmer der in Fig. 2 dargestellten Teleskop-Stahlabdeckung,
- Fig. 6: ein erstes Auszugsystem nach dem Stand der Technik,
- Fig. 7: ein zweites Auszugsystem nach dem Stand der Technik und
- Fig. 8: eine drittes Auszugsystem nach dem Stand der Technik.

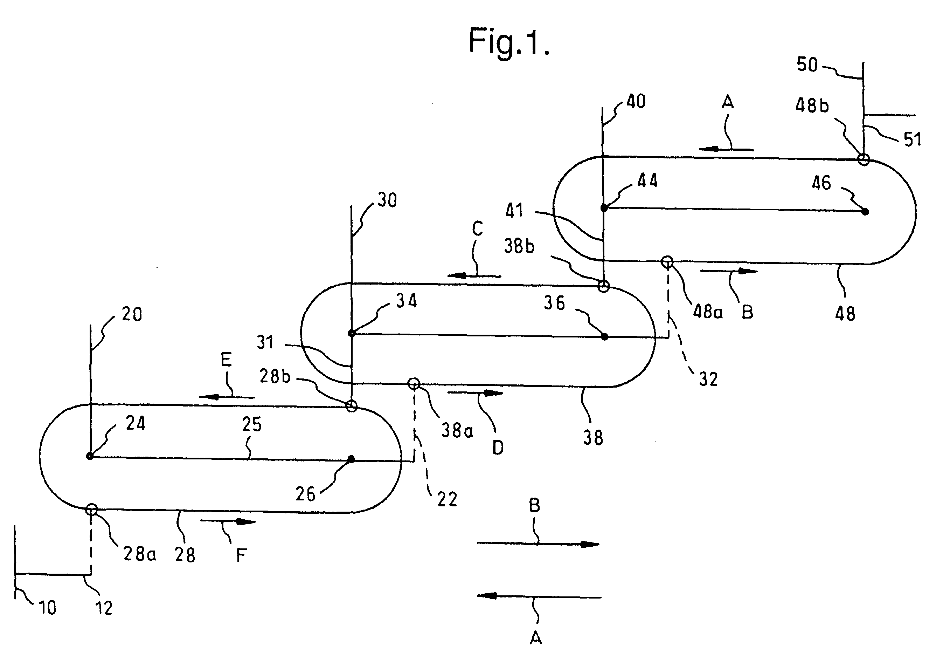

Das in Fig. 1 in einer Auszugstellung dargestellte Auszugsystem weist insgesamt fünf in einer durch die Pfeile B bezeichneten Auszugrichtung und einer dazu entgegengesetzten, durch die Pfeile A bezeichneten Einschubrichtung zwischen einer Einschubstellung und einer Auszugstellung relativ zueinander bewegbare, hintereinander angeordnete Auszugelemente 10, 20, 30, 40 und 50 auf. Zur Kopplung der Bewegung der einzelnen Auszugelemente ist das Auszugsystem ferner mit insgesamt drei endlos umlaufenden Kopplungsketten 28, 38 und 48 versehen. Die erste Kopplungskette 28 umläuft zwei bezüglich dem Auszugelement 20 festgelegte und sich senkrecht zur Auszugrichtung B erstreckende Umlenkachsen 24, 26 und ist längs einer diese Umlenkachsen 24, 26 umlaufenden, festgelegten Bahn bewegbar. Das unmittelbar vor dem Auszugelement 20 angeordnete Auszugelement 10 ist über einen starr damit verbundenen Mitnehmer 12 an ein unteres Trum der Kopplungskette 28 gekoppelt. Der entsprechende Kopplungsbereich 28a der Kopplungskette 28 ist in der in Fig. 1 dargestellten Auszugstellung am hinteren Ende des unteren Trums der Kopplungskette 28 angeordnet. Das unmittelbar hinter dem Auszugelement 20 angeordnete Auszugelement 30 ist über einen starr damit verbundenen Mitnehmer 31 an das obere Trum der Kopplungskette 28 gekoppelt. Der entsprechende Kopplungsbereich 28b ist in der dargestellten Auszugstellung am vorderen Ende des oberen Trums der Kopplungskette 28 angeordnet.

Die zweite Kopplungskette 38 umläuft zwei bezüglich dem Auszugelement 30 festgelegte und sich senkrecht zur Auszugrichtung B erstreckende Umlenkachsen 34 und 36 und ist ebenfalls längs einer diese Umlenkachsen umlaufenden, festgelegten Bahn bewegbar. Das zweite Auszugelement 20 ist über einen starr damit verbundenen Mitnehmer 22 an einem in der dargestellten Auszugstellung am hinteren Ende des unteren Trums der Kopplungskette 38 angeordneten Kopplungsbereich 38a an die Kopplungskette 38 gekoppelt. Das vierte Auszugelement 40 ist über einen starr damit verbundenen Mitnehmer 41 an einem am vorderen Ende der Kopplungskette 38 angeordneten Kopplungsbereich 38b an das obere Trum der Kopplungskette 38 gekoppelt.

Die dritte Kopplungskette 48 umläuft zwei bezüglich dem vierten Auszugelement 40 festgelegte und sich senkrecht zur Auszugrichtung B erstreckende Umlenkachsen 44 und 46 und ist ebenfalls längs einer diese Umlenkachsen umlaufenden, festgelegten Bahn bewegbar. Das dritte Auszugelement 30 ist über einen starr damit verbundenen Mitnehmer 32 an einem in der Auszugstellung am hinteren Ende der Kopplungskette 48 angeordneten Kopplungsbereich 48a an das untere Trum der Kopplungskette 48 gekoppelt. Das fünfte Auszugelement 50 ist über einen starr damit verbundenen Mitnehmer 51 an einem in der Auszugstellung am vorderen Ende der Kopplungskette 48 angeordneten Kopplungsbereich 48b an das obere Trum der Kopplungskette 48 gekoppelt.

Die Kopplungen zwischen den einzelnen Mitnehmer und den Kopplungsketten sind so ausgeführt, daß die Mitnehmer bei einer Bewegung der Kopplungskette mitgeführt werden, bzw. diese bei einer eigenen Bewegung selbst mitführen.

Wenn das fünfte Auszugelement 50 zur Überführung des Auszugsystems aus der in Fig. 1 dargestellten Auszugstellung in die Einschubstellung in Richtung des Pfeils A bezüglich dem vierten Auszugelement 40 bewegt wird, erfolgt eine Übertragung dieser Einschubbewegung über die Kopplungskette 48 und den Mitnehmer 32 auf das starr damit verbundene dritte Auszugelement 30, das dadurch in Richtung des Pfeils B bezüglich dem vierten Auszugelement 40 bewegt wird. Durch diese Relativbewegung des dritten Auszugelements 30 bezüglich dem vierten Auszugelement 40 wird über den starr mit dem vierten Auszugelement 40 verbundenen Mitnehmer 41, die Kopplungskette 38 und den Mitnehmer 22 eine Relativbewegung des starr mit letzterem verbunden Auszugelementes 20 bezüglich dem dritte Auszugelement 30 in der durch den Pfeil D bezeichneten Richtung veranlaßt. Schließlich bewirkt die Relativbewegung des zweiten Auszugelementes 20 bezüglich dem dritten Auszugelement 30 in der durch den Pfeil D bezeichneten Richtung über den starr mit dem dritten Auszugelement 30 verbundenen Mitnehmer 31, die Kopplungskette 28 und den Mitnehmer 12 eine Relativbewegung des mit letzterem starr verbundenem ersten Auszugelementes 10 bezüglich dem zweiten Auszugelement 20 in der durch den Pfeil F bezeichneten Richtung.

Insgesamt wird die Bewegung des fünften Auszugelementes 50 bezüglich dem vierten Auszugelement 40 so in eine Relativbewegung zwischen allen benachbarten Auszugelementen umgesetzt. Wenn das erste Auszugelement 10 beispielsweise an einem Maschinenrahmen festgelegt ist, führt diese Kopplung dazu, daß durch eine Einschubbewegung des fünften Auszugelementes 50 mit einer vorgegebenen Geschwindigkeit in der durch den Pfeil A bezeichneten Richtung eine Einschubbewegung des vierten Auszugelementes 40 in der durch den Pfeil A bezeichneten Einschubrichtung mit der Hälfte der vorgegebenen Geschwindigkeit, eine Einschubbewegung des dritten Auszugelementes 30 in der durch den Pfeil A bezeichneten Richtung mit einem Viertel der vorgegebenen Geschwindigkeit und einer Einschubbewegung des zweiten Auszugelementes 20 in der durch den Pfeil A bezeichneten Einschubrichtung mit einem Achtel der vorgegebenen Geschwindigkeit erfolgt. Auf diese Weise werden während des Einschubvorgangs sämtliche Auszugelemente simultan bewegt. Auf ähnliche Weise werden auch bei einer Auszugbewegung der Auszugelemente aus einer Einschubstellung in der durch den Pfeil B bezeichneten Richtung bezüglich dem am Maschinenrahmen festgelegten Auszugelement 10 die Auszugelement 20, 30, 40 und 50 simultan bewegt wobei die Relativbewegung zwischen allen einander unmittelbar benachbarten Auszugelementen gleich ist.

Der Vollständigkeit halber wird noch darauf hingewiesen, daß die Kopplungsbereiche 28a und 28b der Kopplungskette 28 spiegelsymmetrisch bezüglich einem die Strecke zwischen den Umlenkachsen 24 und 26 halbierenden Punkt 25 angeordnet sind, wodurch die Länge der geradlinigen Abschnitte der Kopplungskette 28 während des Einschub- bzw. Auszugvorgangs vollständig ausgenutzt werden kann.

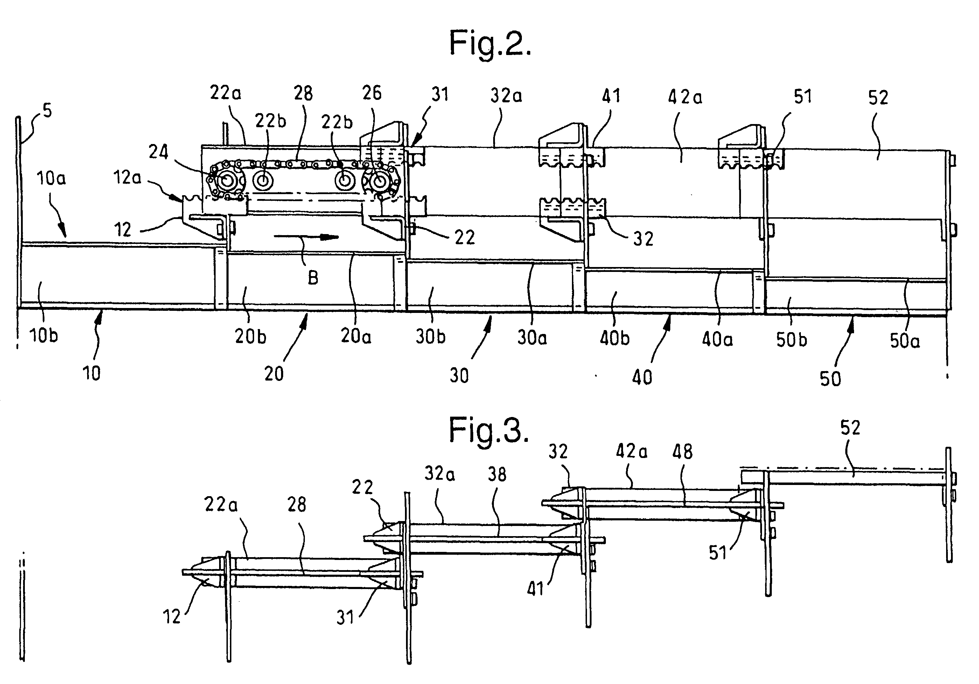

Das in den Fig. 2 bis 5 dargestellte Auszugsystem in Form einer Teleskop-Stahlabdeckung für eine Führungsbahn einer Werkzeugmaschine entpricht hinsichtlich seiner Funktion im wesentlichen dem anhand der Fig. 1 erläuterten Auszugsystem. Daher werden in den Fig. 2 bis 5 für Bauelemente, die den anhand der Fig. 1 erläuterten Bauelementen entsprechen gleiche Bezugszeichen verwendet.

Die dargestellte Teleskop-Stahlabdeckung umfaßt insgesamt fünf einander überlappende Abdeckelemente 10, 20, 30, 40 und 50, von denen jedes eine Deckenwand 10a, 20a, 30a, 40a bzw. 50a und zwei davon ausgehende und sich senkrecht dazu erstreckende Seitenwände 10b, 20b, 30b, 40b bzw. 50b aufweist. Das Abdeckelement 10 ist an einem Maschinenrahmen 5 befestigt. Oberhalb des Abdeckelements 20 ist eine Kopplungskette 28 angeordnet, die in einem starr mit dem Abdeckelement 20 verbunden Kettengehäuse 22a zwei darin gelagerte Zahnräder 24 und 26 umläuft, die um zwei parallele bezüglich dem Abdeckelement 20 festgelegt und sich senkrecht zur durch den Pfeil B bezeichneten Auszugrichtung der Teleskop-Stahlabdeckung erstreckende Drehachsen drehbar sind. Das untere Trum der Kopplungskette 28 kämmt einen sich in Auszugrichtung B erstreckenden zahnstangenförmigen Bereich 12a eines am vorderen Ende des Abdeckelements 10 befestigten Mitnehmers 12. Das vordere Ende des oberen Trums der Kopplungskette 28 kämmt in der in den Fig. 2 und 3 dargestellten Auszugstellung der Teleskop-Stahlabdeckung einen ebenfalls zahnstangenförmigen Bereich eines über ein Kettengehäuse 32a starr am vorderen Ende des Abdeckelements 30 befestigten Mitnehmers 31.

Das Kettengehäuse 32a enthält ähnlich wie das Kettengehäuse 22a eine Kopplungskette 38 (vgl. Fig. 3), die ähnlich wie die Kopplungskette 26 zwei drehbar im Kettengehäuse 32a gelagerte Zahnräder (nicht dargestellt) umläuft. Das hintere Ende des unterem Trums der Kopplungskette 38 kämmt einen zahnstangenförmigen Bereich eines am vorderen Ende des Abdeckelements 20 befestigten Mitnehmers 22, während das vordere Ende des oberen Trums der Kopplungskette 38 in der in den Fig. 2 und 3 dargestellten Auszugstellung einen zahnstangenförmigen Bereich eines über ein Kettengehäuse 42a am vorderen Ende des Abdeckelements 40 befestigten Mitnehmers 41 kämmt.

Im Kettengehäuse 42a ist eine ähnlich wie die Kopplungskette 28 zwei drehbar darin gelagerte Zahnräder umlaufende Kopplungskette 48 (vgl. Fig. 3) eingebaut. In der in den Fig. 2 und 3 dargestellten Auszugstellung kämmt das hintere Ende des unteren Trums der Kopplungskette 48 einen zahnstangenförmigen Bereich eines am vorderen Ende des Abdeckelements 30 befestigten Mitnehmer 32, während das vordere Ende des oberen Trums der Kopplungskette 46 einen zahnstangenförmigen Bereich eines über einen Halter 52 am vorderen Ende des Abdeckelements 50 befestigten Mitnehmers 51 kämmt.

Wie besonders deutlich der Fig. 3 zu entnehmen ist, sind die einzelnen Kopplungsketten 28, 38 und 48 in einer senkrecht zur Auszugrichtung B verlaufenden Richtung in gleichen Abständen seitlich gegeneinander versetzt angeordnet, wobei der am Abdeckelement 20 befestigte Mitnehmer 22 seitlich neben dem Kettengehäuse 22a angeordnet ist und mit einem in einer unteren Wand des Kettengehäuses 32a vorgesehen Schlitz fluchtet. Auf ähnliche Weise sind die am Abdeckelement 30 befestigten Mitnehmer 31 und 32 aufeinander entgegengesetzten Seiten neben dem Kettengehäuse 32a angeordnet und fluchten einerseits mit einem in einer oberen Wand des Kettengehäuses 22a sich in der Auszugrichtung erstreckenden Schlitz und andererseits mit einem in der unteren Wand des Kettengehäuses 42a sich in Auszugrichtung B erstreckenden unteren Schlitz. Der über den Halter 52 am Abdeckelement 50 befestigte Mitnehmer 51 fluchtet mit einem in der oberen Wand des Kettengehäuses 42a sich in Auszugrichtung B erstreckenden Schlitz, während der am vorderen Ende des Abdeckelements 10 befestigte Mitnehmer 12 mit einem in der unteren Wand des Kettengehäuses 22a sich in Auszugrichtung B erstreckenden Schlitz fluchtet.

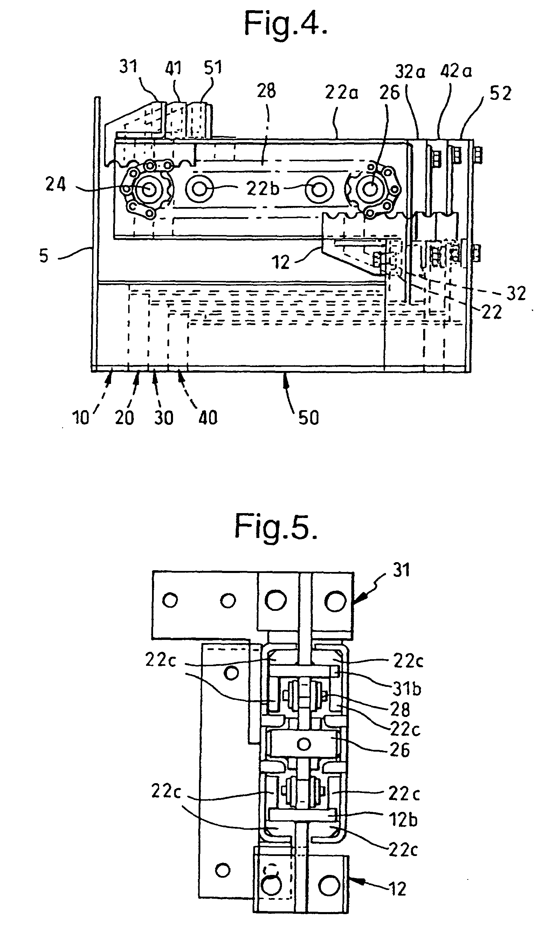

Durch diese Anordnung wird eine formschlüssige Kopplung der einzelnen Mitnehmer an die Kopplungsketten ermöglicht, durch die die Relativbewegung zwischen den einzelnen Auszugelementen nicht behindert wird. Durch diese Bewegung können die Abdeckelemente 10 bis 50 aus der in den Fig. 2 und 3 dargestellten Auszugstellung unter Ausnutzung der anhand der Fig. 1 erläuterten Zwangskopplung ungehindert in die in Fig. 4 dargestellte Einschubstellung verfahren werden, in der die Mitnehmer 31, 41 und 51 bzw. 12, 22 und 32 nebeneinander angeordnet sind und die gesamte Länge in der Auszugrichtung B weniger als einem Drittel der Gesamtlänge in der Auszugstellung beträgt.

Wie besonders deutlich der Fig. 5 zu entnehmen ist, weisen die Mitnehmer 12 und 31 wie auch die übrigen Mitnehmer der Teleskop-Stahlabdeckung, die entsprechende Schlitze in der oberen bzw. unteren Wand des Kettengehäuses 22b durchsetzen, innerhalb des Kettengehäuses 22a Querelemente 31b bzw. 12b auf. Diese Querelemente 31b und 12b sind in von an der Innenwand des Kettengehäuses 22a festgelegten Führungselementen 22c gebildeten, sich in Auszugrichtung B erstreckenden Führungen geführt. Auf diese Weise kann eine stabile Führung der Mitnehmer längs der Kopplungskette erreicht werden. Eine weitere Stabilisierung der Führung wird durch zwischen den Trums der Kopplungskette angeordnete Stützrollen 22b erreicht.

Die Erfindung ist nicht auf das anhand der Zeichnung erläuterte Ausführungsbeispiel beschränkt. Beispielsweise kann ein erfindungsgemäßes Auszugsystem auch mehr als fünf Auszugelemente aufweisen. Ferner ist es möglich, anstelle der Kopplungsketten Kopplungsriemen oder Zahnräder zu verwenden, die an klammer- bzw. zahnstangenförmige Mitnehmer gekoppelt sind. Ferner ist es selbstverständlich auch möglich, die Kopplungselemente und Mitnehmer unter den Deckenwänden zwischen den Seitenwänden der Abdeckelemente anzuordnen. Die Kopplungsketten, Kopplungsriemen o. dgl. können dabei etwa senkrecht verlaufende Umlenkachsen umlaufen. Schließlich ist es mit dem erfindungsgemäßen Auszugsystem auch möglich Teleskop-Stahlabdeckungen für kreislinienförmig gekrümmte Führungsbahnen herzustellen.

## Patentansprüche

1. Teleskop-Stahlabdeckung zum Schutz einer Führungsbahn einer Werkzeugmaschine mit mindestens vier hintereinander angeordneten und in einer Auszugrichtung (B) sowie einer dazu entgegengesetzten Einschubrichtung (A) zwischen einer Einschubstellung und einer Auszugstellung relativ zueinander bewegbaren Auszugelementen (10, 20, 30, 40, 50), bei der eine Gruppe von drei unmittelbar hintereinander angeordneten Auszugelementen (10, 20, 30) über eine bei einer Relativbewegung zwischen zwei Auszugelementen (20, 30) der Gruppe zwangsweise eine Relativbewegung zwischen diesen beiden Auszugelementen (20, 30) und dem dritten Auszugelement (10) der Gruppe bewirkende Kopplungseinrichtung (12, 28, 31) miteinander verbunden sind, **dadurch gekennzeichnet, dass** die Kopplungseinrichtung ein eine bezüglich dem mittleren Auszugelement (20) der Gruppe festgelegte und sich senkrecht zur Auszugrichtung erstreckende Umlenkachse (24, 26) umlaufendes und längs einer bezüglich der Umlenkachse (24, 26) festgelegten und diese umlaufenden Bahn bewegbares Kopplungselement (28) sowie zwei einerseits an entsprechenden Kopplungsbereichen (28a, 28b) an das Kopplungselement (28) gekoppelte und andererseits mit jeweils einem der äußeren Auszugelemente (10, 30) der Gruppe verbundene Mitnehmer (12, 31) aufweist, wobei das Kopplungselement (28) die Umlenkachse (24, 26) zwischen den Kopplungsbereichen (28a, 28b) zumindest teilweise umläuft, wobei die Kopplungseinrichtung ein eine bezüglich einem der äußeren Auszugelemente (30) der Gruppe festgelegte und sich senkrecht zur Auszugrichtung (B) erstreckende zweite Umlenkachse (34, 36) umlaufendes und längs einer bezüglich der zweiten Umlenkachse (34, 36) festgelegten und diese umlaufenden zweiten Bahn bewegbares zweites Kopplungselement (38) sowie zwei weitere an entsprechenden Kopplungsbereichen (38a, 38b) an das zweite Kopplungselement (38) gekoppelte Mitnehmer (22, 41) aufweist, von denen einer mit dem mittleren Auszugelement (20) der Gruppe und der andere mit einem vierten Auszugelement (40) verbunden ist, wobei das zweite Kopplungselement (38) die zweite Umlenkachse (34, 36) zwischen den Kopplungsbereichen (38a, 38b) zumindest teilweise umläuft.

2. Teleskop-Stahlabdeckung nach Anspruch 1, **dadurch gekennzeichnet, daß** jedem der zwischen dem ersten (10) und dem letzten Auszugelement (50) angeordneten Auszugelemente (20, 30, 40) ein Kopplungselement (28, 38, 48) zugeordnet ist, das eine bezüglich dem entsprechenden Auszugelement (20, 30, 40) festgelegte und sich senkrecht zur Auszugrichtung erstreckende Umlenkachse (24, 26, 34, 36, 44, 46) umläuft und längs einer bezüglich dieser Umlenkachse (24, 26, 34, 36, 44, 46) festgelegten und diese umlaufenden Bahn bewegbar ist, wobei an jedes Kopplungselement (28, 38, 48) an entsprechenden Kopplungsbereichen (28a, 28b, 38a, 38b, 48a, 48b) zwei Mitnehmer (12, 22, 31, 32, 41, 51) gekoppelt sind, von denen einer mit dem unmittelbar vor dem entsprechenden Auszugelement (20, 30, 40) angeordneten Auszugelement (10, 20, 30) verbunden ist und der andere mit dem unmittelbar dahinter angeordneten Auszugelement (30, 40, 50) verbunden ist, und das Kopplungselement (28, 38, 48) die jeweilige Umlenkachse (24, 26, 34, 36, 44, 46) zwischen den Kopplungsbereichen (28a, 28b, 38a, 38b, 48a, 48b) zumindest teilweise umläuft.

3. Teleskop-Stahlabdeckung nach Anspruch 1 oder 2, **dadurch gekennzeichnet, daß** mindestens eines der Kopplungselemente (28, 38, 48) die entsprechende Umlenkachse (24, 26, 34, 36, 44, 46) zwischen den Kopptungsbereichen (28a, 28b, 38a, 38b, 48a, 48b) um 180° umläuft.

4. Teleskop-Stahlabdeckung nach Anspruch 3, **dadurch gekennzeichnet, daß** mindestens eines der Kopplungselemente (28, 38, 48) zwei parallele Umlenkachsen (24, 26, 34, 36, 44, 46) umläuft, zwischen denen es zwei parallel zueinander verlaufende, jeweils einen Kopplungsbereich (28a, 28b, 38a, 38b, 48a, 48b) umfassende, geradlinige Abschnitte aufweist.

5. Teleskop-Stahlabdeckung nach Anspruch 4, **dadurch gekennzeichnet, daß** die Kopplungsbereiche (28a, 28b) spiegelsymmetrisch bezüglich einem die Strecke zwischen den beiden Umlenkachsen (24, 26) halbierenden Punkt (25) angeordnet sind.

6. Teleskop-Stahlabdeckung nach Anspruch 4 oder 5, **dadurch gekennzeichnet, daß** die Mitnehmer (12, 22, 31, 32, 41, 51) in sich parallel zu den geradlinig verlaufenden Abschnitten erstreckenden Führungen geführt sind.

7. Teleskop-Stahlabdeckung nach einem der Ansprüche 4 bis 6, **dadurch gekennzeichnet, daß** zwischen den geradlinig verlaufenden Abschnitten mindestens ein Stützelement, wie etwa eine Stützrolle (22b) angeordnet ist.

8. Teleskop-Stahlabdeckung nach einem der vorhergehenden Ansprüche, **dadurch gekennzeichnet, daß** mindestens eines der Kopplungselemente (28, 38, 48) eine Stahlkette, z.B. eine Zahnkette, ist.

9. Teleskop-Stahlabdeckung nach Anspruch 8, **dadurch gekennzeichnet, daß** mindestens einer der an die Stahlkette (28, 38, 48) gekoppelten Mitnehmer (12, 22, 31, 32, 41, 51) eine sich parallel zur Auszugrichtung erstreckende, in die Stahlkette (28, 38, 48) eingreifende Zahnstange (12a) aufweist.

10. Teleskop-Stahlabdeckung nach einem der vorhergehenden Ansprüche, **dadurch gekennzeichnet, daß** die Auszugelemente (10, 20, 30, 40, 50) sich in der Einschubstellung zumindest teilweise überlappen.

11. Teleskop-Stahlabdeckung nach Anspruch 10, **dadurch gekennzeichnet, daß** die Auszugelemente (10, 20, 30, 40, 50) sich in der Auszugstellung zumindest teilweise überlappen.

12. Teleskop-Stahlabdeckung nach Anspruch 10 oder 11, **dadurch gekennzeichnet, daß** die Auszugelemente Abdeckelemente einer Teleskop-Stahlabdeckung zum Schutz einer Führungsbahn einer Werkzeugmaschine sind.

13. Teleskop-Stahlabdeckung nach Anspruch 12 für eine Führungsbahn eines beweglichen Maschinenteils.

## Claims

1. Telescopic steel cover for protecting a guideway of a machine tool, having at least four pull-out elements (10, 20, 30, 40, 50) arranged one behind the other and movable relative to one another in a pull-out direction (B) and in a push-in direction (A) opposed thereto between a push-in position and a pull-out position, in which telescopic steel cover a group of three pull-out elements (10, 20, 30) arranged directly one behind the other are connected to one another via a coupling arrangement (12, 28, 31) which, during a relative movement between two pull-out elements (20, 30) of the group, produces a relative movement between these two pull-out elements (20, 30) and the third pull-out element (10) of the group in a positively actuated manner, **characterized in that** the coupling arrangement has a coupling element (28), which runs around a deflection axis (24, 26), fixed relative to the centre pull-out element (20) of the group and extending perpendicularly to the pull-out direction, and is movable along a path fixed relative to the deflection axis (24, 26) and running around the latter, and two drivers (12, 31) coupled on the one hand to the coupling element (28) at corresponding coupling regions (28a, 28b) and connected on the other hand to in each case one of the outer pull-out elements (10, 30), the coupling element (28) running at least partly around the deflection axis (24, 26) between the coupling regions (28a, 28b), the coupling arrangement having a second coupling element (38), which runs around a second deflection axis (34, 36), fixed relative to one of the outer pull-out elements (30) of the group and extending perpendicularly to the pull-out direction (B), and is movable along a second path fixed relative to the second deflection axis (34, 36) and running around the latter, and two further drivers (22, 41) which are coupled to the second coupling element (38) at corresponding coupling regions (38a, 38b) and of which one is connected to the centre pull-out element (20) of the group and the other is connected to a fourth pull-out element (40), the second coupling element (38) running at least partly around the second deflection axis (34, 36) between the coupling regions (38a, 38b).

2. Telescopic steel cover according to Claim 1, **characterized in that** a coupling element (28, 38, 48) is assigned to each of the pull-out elements (20, 30, 40) arranged between the first pull-out element (10) and the last pull-out element (50), which coupling element (28, 38, 48) runs around a deflection axis (24, 26, 34, 36, 44, 46), fixed relative to the corresponding pull-out element (20, 30, 40) and extending perpendicularly to the pull-out direction, and is movable along a path fixed relative to this deflection axis (24, 26, 34, 36, 44, 46) and running around the latter, two drivers (12, 22, 31, 32, 41, 51) being coupled to each coupling element (28, 38, 48) at corresponding coupling regions (28a, 28b, 38a, 38b, 48a, 48b), of which drivers (12, 22, 31, 32, 41, 51) one is connected to the pull-out element (10, 20, 30) arranged directly in front of the corresponding pull-out element (20, 30, 40) and the other is connected to the pull-out element (30, 40, 50) arranged directly behind it, and the coupling element (28, 38, 48) running at least partly around the respective deflection axis (24, 26, 34, 36, 44, 46) between the coupling regions (28a, 28b, 38a, 38b, 48a, 48b).

3. Telescopic steel cover according to Claim 1 or 2, **characterized in that** at least one of the coupling elements (28, 38, 48) runs around the corresponding deflection axis (24, 26, 34, 36, 44, 46) between the coupling regions (28a, 28b, 38a, 38b, 48a, 48b) by 180°.

4. Telescopic steel cover according to Claim 3, **characterized in that** at least one of the coupling elements (28, 38, 48) runs around two parallel deflection axes (24, 26, 34, 36, 44, 46), between which it has two rectilinear sections running parallel to one another and in each case comprising a coupling region (28a, 28b, 38a, 38b, 48a, 48b).

5. Telescopic steel cover according to Claim 4, **characterized in that** the coupling regions (28a, 28b) are arranged in mirror symmetry relative to a point (25) halving the distance between the two deflection axes (24, 26)

6. Telescopic steel cover according to Claim 4 or 5, **characterized in that** the drivers (12, 22, 31, 32, 41, 51) are guided in guides extending parallel to the rectilinear sections.

7. Telescopic steel cover according to one of Claims 4 to 6, **characterized in that** at least one supporting element, such as a supporting roller (22b) for instance, is arranged between the rectilinear sections.

8. Telescopic steel cover according to one of the preceding claims, **characterized in that** at least one of the coupling elements (28, 38, 48) is a steel chain, e.g. an inverted tooth chain.

9. Telescopic steel cover according to Claim 8, **characterized in that** at least one of the drivers (12, 22, 31, 32, 41, 51) coupled to the steel chain (28, 38, 48) has a toothed rack (12a) extending parallel to the pull-out direction and meshing with the steel chain (28, 38, 48).

10. Telescopic steel cover according to one of the preceding claims, **characterized in that** the pull-out elements (10, 20, 30, 40, 50) at least partly overlap in the push-in position.

11. Telescopic steel cover according to Claim 10, **characterized in that** the pull-out elements (10, 20, 30, 40, 50) at least partly overlap in the pull-out position.

12. Telescopic steel cover according to Claim 10 or 11, **characterized in that** the pull-out elements are cover elements of a telescopic steel cover for protecting a guideway of a machine tool.

13. Telescopic steel cover according to Claim 12 for a guideway of a movable machine part.

## Revendications

1. Protection télescopique en acier pour protéger une glissière de guidage d'une machine-outil avec au moins quatre éléments télescopiques (10, 20, 30, 40, 50) disposés les uns derrière les autres et déplaçables les uns relativement aux autres dans une direction télescopique (B) et une direction de rentrée (A) opposée à celle-ci entre une position rentrée et une position sortie, où un groupe de trois éléments télescopiques (10, 20, 30) disposés directement les uns derrière les autres sont reliés les uns aux autres par une installation de couplage (12, 28, 31) provoquant lors d'un déplacement relatif entre deux éléments télescopiques (20, 30) du groupe forcément un déplacement relatif entre ces deux éléments télescopiques (20, 30) et le troisième élément télescopique (10) du groupe, **caractérisée en ce que** l'installation de couplage présente un élément de couplage (28) tournant autour d'un axe de renvoi (24, 26) fixé par rapport à l'élément télescopique médian (20) du groupe et s'étendant perpendiculairement à la direction télescopique, et déplaçable le long d'une glissière fixée par rapport à l'axe de renvoi (24, 26) et tournant autour de celui-ci ainsi que deux éléments d'entraînement (12, 31) couplés, d'une part, à des zones de couplage correspondantes (28a, 28b) à l'élément de couplage (28) et reliés, d'autre part, à respectivement l'un des éléments télescopiques extérieurs (10, 30) du groupe, où l'élément de couplage (28) entoure l'axe de déviation (24, 26) entre les zones de couplage (28a, 28b) au moins partiellement, où l'installation de couplage présente un deuxième élément de couplage (38) fixé relativement à l'un des éléments télescopiques extérieurs (30) du groupe et tournant autour d'un deuxième axe de déviation (34, 36) s'étendant perpendiculairement à la direction télescopique (B), et déplaçable le long d'une deuxième glissière fixée relativement au deuxième axe de déviation (34, 36) et tournant autour de celui-ci, ainsi que deux autres éléments d'entraînement (22, 41) couplés à des zones de couplage correspondantes (38a, 38b) au deuxième élément de couplage (38), dont un est relié à l'élément télescopique médian (20) du groupe et l'autre à un quatrième élément télescopique (40), où le deuxième élément de couplage (38) entoure au moins partiellement le deuxième axe de déviation (34, 36) entre les zones de couplage (38a, 38b).

2. Protection télescopique en acier selon la revendication 1, **caractérisée en ce qu'**il est associé à chacun des éléments télescopiques (20, 30, 40) disposés entre le premier (10) et le dernier élément télescopique (50) un élément de couplage (28, 38, 48) qui tourne autour d'un axe de déviation (24, 26, 34, 36, 44, 46) fixé relativement à l'élément télescopique correspondant (20, 30, 40) et s'étendant perpendiculairement à la direction télescopique et qui est déplaçable le long d'une glissière fixée relativement à cet axe de déviation (24, 26, 34, 36, 44, 46) et tournant autour de celui-ci, où sont couplés à chaque élément de couplage (28, 38, 48), à des zones de couplage correspondantes (28a, 28b, 38a, 38b, 48a, 48b) deux éléments d'entraînement (12, 22, 31, 32, 41, 51) dont un est relié à l'élément télescopique (10, 20, 30) disposé directement en amont de l'élément télescopique correspondant (20, 30, 40) et dont l'autre est relié à l'élément de tirage (30, 40, 50) disposé directement en aval de celui-ci, et **en ce que** l'élément de couplage (28, 38, 48) tourne au moins partiellement autour de l'axe de déviation respectif (24, 26, 34, 36, 44, 46) entre les zones de couplage (28a, 28b, 38a, 38b, 48a, 48b).

3. Protection télescopique en acier selon la revendication 1 ou 2, **caractérisé en ce qu'**au moins l'un des éléments de couplage (28, 38, 48) tourne autour de l'axe de déviation correspondant (24, 26, 34, 36, 44, 46) entre les zones de couplage (28a, 28b, 38a, 38b, 48a, 48b) selon 180°.

4. Protection télescopique en acier selon la revendication 3, **caractérisé en ce qu'**au moins l'un des éléments de couplage (28, 38, 48) tourne autour de deux axes de renvoi parallèles (24, 26, 34, 36, 44, 46), entre lesquels il présente deux tronçons rectilignes, s'étendant parallèlement l'un à l'autre, entourant respectivement une zone de couplage (28a, 28b, 38a, 38b, 48a, 48b).

5. Protection télescopique en acier selon la revendication 4, **caractérisée en ce que** les zones de couplage (28a, 28b) sont disposées d'une manière spéculairement symétrique par rapport à un point (25) divisant le chemin entre les deux axes de déviation (24, 26).

6. Protection télescopique en acier selon la revendication 4 ou 5, **caractérisée en ce que** les éléments d'entraînement (12, 22, 31, 32, 41, 51) sont guidés dans des guidages s'étendant parallèlement aux tronçons rectilignes.

7. Protection télescopique en acier selon l'une des revendications 4 à 6, **caractérisé en ce qu'**il est disposé entre les tronçons rectilignes au moins un élément d'appui, par exemple un rouleau d'appui (22b).

8. Protection télescopique en acier selon l'une des revendications précédentes, **caractérisé en ce qu'**au moins l'un des éléments de couplage (28, 38, 48) est une chaîne en acier, par exemple une chaîne dentée.

9. Protection télescopique en acier selon la revendication 8, **caractérisée en ce qu'**au moins l'un des éléments d'entraînement (12, 22, 31, 32, 41, 51) couplé à la chaîne d'acier (28, 38, 48) présente une crémaillère (12a) s'étendant parallèlement à la direction télescopique, venant en prise avec la chaîne d'acier (28, 38, 48).

10. Protection télescopique en acier selon l'une des revendications précédentes, **caractérisée en ce que** les éléments télescopiques (10, 20, 30, 40, 50), en position rentrée, se chevauchent au moins partiellement.

11. Protection télescopique en acier selon la revendication 10, **caractérisée en ce que** les éléments télescopiques (10, 20, 30, 40, 50), en position sortie, se chevauchent au moins partiellement.

12. Protection télescopique en acier selon la revendication 10 ou 11, **caractérisée en ce que** les éléments télescopiques sont des éléments de recouvrement d'une protection télescopique en acier pour protéger une glissière de guidage d'une machine-outil.

13. Protection télescopique en acier selon la revendication 12, pour une glissière de guidage d'une partie de machine mobile.
